# EUROPEAN PATENT SPECIFICATION

(11) **EP 0 417 154 B1**
(45) Date of publication and mention of the grant of the patent: **03.08.1994**
(21) Application number: 89906205.3
(22) Date of filing: 16.05.1989
(51) Int. Cl.: C08L 1/26

(54) **METHOD UPON A TEMPERATURE INCREASE OF COUNTERACTING A VISCOSITY DECREASE OR PROVIDING A VISCOSITY INCREASE IN A WATER-BASE SYSTEM CONTAINING A POLYMER AS VISCOSITY AGENT**
VERFAHREN, UM IN EINEM SYSTEM AUF WASSERBASIS MIT EINEM POLYMER ALS VISKOSITÄTSREGLER BEI EINEM TEMPERATURANSTIEG EINER VISKOSITÄTSABNAHME ENTGEGENZUWIRKEN ODER EINEN VISKOSITÄTSANSTIEG ZU ERREICHEN
PROCEDE SERVANT, LORS D'UNE AUGMENTATION DE TEMPERATURE, A CONTRER UNE BAISSE DE VISCOSITE OU A OBTENIR UN ACCROISSEMENT DE VISCOSITE DANS UN SYSTEME A BASE D'EAU CONTENANT UN POLYMERE COMME AGENT DE VISCOSITE

(30) Priority: 24.05.1988 SE 8801918
(43) Date of publication of application: 20.03.1991
(73) Proprietor: Berol Nobel AB, 444 85 Stenungsund 1 (SE)
(72) Inventor: CARLSSON, Anders, S-223 51 Lund (SE); LINDMAN, Björn, S-223 63 Lund (SE); STENBERG, Olle, S-181 61 Lidingö (SE)
(74) Representative: Andersson, Rolf
(86) International application number: SE8900266
(87) International publication number: WO8911503

(56) References cited:
- Chemical Abstracts, vol. 89 (1978), abstract No 75607z, Faserforsch. Textiltech. 1978, 29(6), 402-6 (Ger)
- Chemical Abstracts, vol. 103 (1985), abstract No 7170j, Res. discl. 1985, 252, 180 (Eng)
- Chemical Abstracts, vol. 106 (1987), abstract No 158140n, Polymer 1987, 28(2), 288-92 (Eng)

## Description

The present invention relates to use of a water-base system containing as viscosity-adjusting agent a nonionic water-soluble cellulose ether and a water-soluble ionic surface-active compound, for at least partially avoiding an expected viscosity decrease or providing a viscosity increase upon a temperature increase.

Water-soluble polymers in most cases give rise to a substantial viscosity increase when dissolved in water. A large number of water-base systems therefore contain polymers and viscosity-adjusting agents. Also small additions, e.g. below 1% by weight, may cause considerable changes in the viscosity of the aqueous solution and even give rise to gelation. The viscosity of an aqueous solution of a polymer generally is dependent on concentration and temperature. Normally, the viscosity increases upon an increase of the polymer concentration or upon a temperature drop. Examples of polymers exhibiting such a temperature dependence are sodium alginate, polyvinyl alcohol and tragacanth.

There are many types of gel-forming water-soluble polymers. In most of these polymers, gelation occurs upon a temperature drop. Some polymers exhibit in aqueous solution a so-called turbidity point or flocculation temperature, which means that the polymer precipitates when the temperature is raised above a critical temperature. Known examples of such polymers are nonionic cellulose ethers. The normal behaviour of nonionic cellulose ethers is that the viscosity is reduced when the temperature is increased above room temperature. The reduction continues until flocculation temperature is attained. At this temperature, the solution starts becoming turbid and if the concentration of the polymer is sufficiently high, a viscosity increase can be observed. The process is reversible.

Protein solutions are somewhat exceptional in respect of temperature dependence. They often exhibit irreversible processes depending on so-called denaturation of the proteins when the temperature is raised. This in turn may give rise to irreversible gelation upon a temperature increase.

Thus, it can be concluded that the viscosity of a polymer solution is reduced upon a temperature increase, although certain polymers exhibit a substantial viscosity increase at their flocculation temperatures.

In many applications it is desirable to have access to water-base polymer solutions which exhibit a smaller viscosity decrease upon a temperature increase than current polymers or even a maintained or increased viscosity before gelation (viscosity increase associated with phase separation) possibly occurs.

Such properties are valuable in ceramic processes when aqueous mixtures should be extruded and the product thereafter heated with unaltered geometry. To this end, a constant or an increasing viscosity with increasing temperature is needed in order that the structure of the extruded product should not collapse. This is also the case in several applications within the food industry where extrusion is often carried out with subsequent heating. In deep-frying, it may sometimes be desirable to increase the viscosity when the temperature is raised so as to reduce the penetration of frying-oil into the food product. Other fields of use are liquid compositions for therapeutic or cosmetic treatment of man and animal where it is desirable in many cases that the viscosity of the compositions be raised, possibly followed by gelation upon heating to body temperature. Further examples are found in suspension polymerisation when it is desirable to provide stabilisation of monomer-containing droplets at increased temperatures.

Canadian Patent Specification 1,072,413 discloses a method for preparing water-base polymer compositions which are liquid at room temperature, but lose their fluidity and form a gel upon a temperature increase. This is achieved by using a gel-forming component in the form of a special type of block polymer of ethylene oxide and propylene oxide, optionally in combination with a modifying polymer component. Chemical Abstract, vol 106 (1987), no. 158140n discloses an object which contains both a nonionic cellulose ether and a ionic surface-active compound.

It has now surprisingly been found that the expected viscosity decrease upon a temperature increase in a water-base polymer system containing a liquid phase of which at least 85% by weight is water, is considerably reduced and in many cases even changed into a viscosity increase by using a water-base polymer system the liquid phase of which contains as viscosity-adjusting agent:
a) a nonionic cellulose ether in such an amount that the aqueous solution thereof has a viscosity of 10-10,000 cP, preferably 30-5,000 cP, measured according to Brookfield LV, 12 rpm at 20°C, and
b) a water-soluble ionic surface-active compound in an amount of 1-30 mmol, preferably 2-20 mmol per litre of water.

The system thus obtained exhibits a surprisingly advantageous viscosity behaviour upon a temperature increase. By adjusting the flocculation temperature of the cellulose ether and the amount of ionic surface-active compound, gels and gel-like structures can also be obtained. Especially advantageous are the properties of the system at low shear rates, such as shear rates of about 5 s⁻¹, preferably below 1 s⁻¹. The content of the ionic surface-active compound is preferably selected so as to be of the same order of magnitude as the critical micelle-forming concentration, although evident viscosity-improving effects can be observed at a lower concentration. A suitable added amount of the ionic surface-active compound is about 0.2-5 times the critical micelle-forming concentration.

The ionic surface-active compounds may be both cationic and anionic micelle-forming compounds. Examples of suitable cationic compounds are quaternary ammonium compounds with at least one hydrocarbon group having 8-24 carbon atoms. Examples of suitable anionic surface-active compounds primarily are sulphates, such as ether sulphates and alkyl sulphates, with a hydrocarbon group having 8-24 carbon atoms, but also carboxylates, sulphonates, ether phosphates, phosphates and phosphonates with one or more hydrocarbon groups having 8-24 carbon atoms are advantageously used. The hydrocarbon groups may be both aliphatic and aromatic.

The cellulose ethers according to the invention should be water-soluble at the temperature at which the aqueous solution is prepared. They suitably have such a degree of polymerisation that a 1% aqueous solution thereof has a viscosity of 10-10,000 cP, preferably 30-5,000 cP, measured according to Brookfield LV, 12 rpm at 20°C. They may exhibit hydrophobic hydrocarbon groups, such as methyl, ethyl, propyl, butyl, benzyl and higher hydrocarbon groups having 8-24 carbon atoms or polar hydroxyl groups, such as hydroxyethyl, hydroxypropyl and hydroxybutyl, or mixtures of hydrocarbon groups and polar groups. The flocculation temperature of the cellulose ethers suitably is above room temperature and is adjusted to the field of use of the system. Examples of suitable cellulose ethers are methylcellulose, ethylcellulose, hydroxyethylcellulose, hydroxypropylcellulose, methylhydroxyethylcellulose, ethylhydroxypropylcellulose, ethylhydroxyethylcellulose and benzylethylhydroxyethylcellulose.

The present invention can be used at different pH values, although strongly basic and acid pH values should be avoided as well as high electrolyte contents. The polymer system may advantageously be used as a coating to establish a barrier, e.g. for preventing dehydration. Components having therapeutic and cosmetic effects can also be incorporated in the system. It is also possible in the liquid phase to disperse solid and liquid materials, such as fillers and binders, e.g. in the production of ceramic materials and foodstuffs.

### Example

Nonionic cellulose derivatives and ionic surface-active compounds are added to water in the amounts stated in the following Tables. The viscosity of the compositions was measured at different temperatures and different shear rates. The results appear from the Tables.

**Table 1**

| List of substances used | | | |
|---|---|---|---|
| Code | Compound | Flocculation temperature °C | Viscosity 1% solution 20°C Brookfield LV, 12 rpm |
| A | Ethylhydroxyethylcellulose | 45 | 4800 |
| B | " | 38 | 34 |
| C | Hydroxypropylcellulose | 45 | 2500 |
| D | Hydroxyethylcellulose modified with C₁₄-alkyl groups | >100 | 175 |
| E | Ethylhydroxyethylcellulose | 73 | 4500 |
| F | Methylcellulose | 44 | 55 |
| CTAB | Cetyltrimethyl ammonium bromide | | |
| SOS | Sodium dodecylsulphate | | |

**Table 2**

| Results | | | | | | | | |
|---|---|---|---|---|---|---|---|---|
| Test | Additive Ether Surfactant | Conc. % by weight mmol | Viscosity 0.0147 s⁻¹ | | | | | |
| | | | 20°C | 30°C | 40°C | 50°C | 60°C | 70°C |
| 1 | A | 1 | 9000 | 6700 | 4400 | 1900 | - | - |
| 2 | A | 1 | 21000 | 24000 | 26000 | 34000 | 49000 | - |
| | CTAB | 10 | | | | | | |
| 3 | B | 1 | 300 | 400 | 700 | 500 | 100 | - |
| 4 | B | 1 | 400 | 600 | 1600 | 6100 | - | 9100 |
| | CTAB | 12 | | | | | | |

**Table 3**

| Results | | | | | | | | |
|---|---|---|---|---|---|---|---|---|
| Test | Additive Ether Surfactant | Conc. % by weight mmol | Viscosity 0.0147 s⁻¹ | | | | | |
| | | | 20°C | 30°C | 40°C | 50°C | 60°C | 70°C |
| 5 | A | 1 | 1·10⁴ | 2·10⁴ | 2·10⁴ | 2·10⁴ | 4·10⁴ | 1·10⁴ |
| 6 | A SDS | 1 | 15·10⁴ | 20·10⁴ | 25·20⁴ | 40·10⁴ | 50·10⁴ | 50·10⁴ |
| | | 5 | | | | | | |
| 7 | A SDS | 1 | 20·10⁴ | 30·10⁴ | 40·10⁴ | 50·10⁴ | 50·10⁴ | - |
| | | 10 | | | | | | |
| 8 | A SDS | 0.5 | 5000 | 10000 | 15000 | 20000 | 30000 | 30000 |
| | | 5 | | | | | | |
| 9 | A SDS | 0.5 | 3000 | 15000 | 9000 | 10000 | 20000 | 30000 |
| | | 10 | | | | | | |
| 10 | A SDS | 0.25 | 300 | 2500 | 4000 | 6000 | 8000 | 10000 |
| | | 10 | | | | | | |
| 11 | D | 1 | 3000 | 4000 | 3000 | 300 | - | - |
| 12 | D | 1 | 3·10⁵ | 2·10⁵ | 2·10⁵ | 2·10⁵ | - | - |
| | SDS | 5 | | | | | | |
| 13 | C | 1 | 3000 | 1500 | 500 | 8000 | 7000 | 8000 |
| 14 | C | 1 | 2·10⁵ | 3·10⁵ | 4·10⁵ | 4·10⁵ | 3·10⁵ | 2·10⁵ |
| | SDS | 5 | | | | | | |
| 15 | E | 0.5 | 3500 | 4000 | 4000 | 4000 | 3000 | 1500 |
| 16 | E | 0.5 | 1200 | 3000 | 5000 | 7000 | 4000 | 11000 |
| | SDS | 5 | | | | | | |

**Table 4**

| Results | | | | | | | | |
|---|---|---|---|---|---|---|---|---|
| Test | Additive Ether Surfactant | Conc. % by weight mmol | Viscosity 0.0147 s⁻¹ | | | | | |
| | | | 20°C | 30°C | 40°C | 50°C | 60°C | 70°C |
| 17 | A | 1 | 2200 | 1900 | 1400 | 900 | 600 | - |
| 18 | A | 1 | 12000 | 14000 | 15000 | 21000 | 24000 | - |
| | CTAB | 10 | | | | | | |
| 19 | B | 1 | 60 | 60 | 90 | 30 | 20 | - |
| 20 | B | 1 | 350 | 450 | 1500 | 5800 | 5800 | - |
| | CTAB | 12 | | | | | | |
| 21 | A | 1 | 2.5·10⁴ | 2.5·10⁴ | 3·10⁴ | 2.5·10⁴ | 2·10⁴ | 1.5·10⁴ |
| | SDS | 5 | | | | | | |
| 22 | A | 1 | 4·10⁴ | 6·10⁴ | 4·10⁴ | 3.5·10⁴ | 3·10⁴ | 2·10⁴ |
| | SDS | 10 | | | | | | |
| 23 | A | 0.5 | 400 | 200 | 150 | 70 | 30 | - |
| 24 | A | 0.5 | 1500 | 2100 | 3000 | 6000 | 5000 | 1600 |
| | SDS | 5 | | | | | | |
| 25 | A | 0.5 | 1000 | 100 | 1300 | 160 | 300 | 500 |
| | SDS | 10 | | | | | | |
| 26 | A | 0.25 | 20 | 300 | 600 | 900 | 1200 | 1500 |
| | SDS | 10 | | | | | | |
| 27 | D | 1 | 250 | 150 | 100 | 60 | 30 | 40 |
| 28 | D | 1 | 3·10⁵ | 2·10⁵ | 2·10⁵ | 2·10⁵ | 2·10⁵ | 2·10⁵ |
| | SDS | 5 | | | | | | |
| 29 | C | 1 | 1500 | 1200 | 800 | 30 | 70 | 100 |
| 30 | C | 1 | 2·10⁴ | 2·10⁴ | 1.5·10⁴ | 1.5·10⁵ | 1.5·10⁴ | 3·10³ |
| | SDS | 5 | | | | | | |
| 31 | E | 0.5 | 500 | 300 | 2500 | 170 | 120 | 60 |
| 32 | E | 0.5 | 20 | 25 | 50 | 90 | 110 | 200 |
| | SDS | 5 | | | | | | |
| 33 | F | 2 | 1.5·10³ | 7·10² | 4·10² | 2·10² | - | - |
| 34 | F | 2 | 8·10³ | 5·10³ | 4·10³ | 5·10³ | - | - |
| | SDS | 10 | | | | | | |

From the above results appears that water-base polymer systems containing as viscosity-adjusting agents both a nonionic cellulose ether and an ionic surface-active compound have a considerably improved viscosity evolution at raised temperatures than such systems as contain a nonionic cellulose ether alone.

## Claims

1. Use of a water-base system containing a liquid phase of which at least 85% is water and which contains as a viscosity-adjusting agent:
a. a nonionic cellulose ether in such an amount that the aqueous solution thereof has a viscosity of 10-10,000 cP, measured according to Brookfield LV, 12 rpm at 20°C, and
b. an ionic surface-active compound in an amount of 1-30 mmol per litre of water,
when increasing the temperature of the water-based system.

2. Use as claimed in claim 1, **characterised** in that the cellulose ether is an alkylhydroxyalkylcellulose.

3. Use as claimed in claim 1 or 2, **characterised** in that the cellulose ether is added in such an amount that it has a viscosity of 30-5,000 cP, measured according to Brookfield LV, 12 rpm at 20°C.

4. Use as claimed in any one of claims 1-3, **characterised** in that the ionic compound is a sulphate with a hydrocarbon group having 8-24 carbon atoms.

5. Use as claimed in any one of claims 1-3, **characterised** in that the compound is a quaternary ammonium compound with a hydrocarbon group having 8-24 carbon atoms.

6. Use as claimed in any one of claims 1-5, **characterised** in that the ionic compound is added in an amount of 2-20 mmol per litre of water.

7. Use as claimed in claims 1-6, **characterised** in that the ionic surface-active compound is added in a content of 0.2-5 times its critical micelle-forming concentration.

## Patentansprüche

1. Verwendung eines auf Wasser basierenden Systems enthaltend eine flüssige Phase, von der mindestens 85% Wasser sind und die als Viskositätsregler:
a. einen nicht-ionischen Celluloseether in solcher Menge, daß die wäßrige Lösung davon eine Viskosität von 10-10000 cP, gemessen gemäß Brookfield LV, 12 UpM bei 20°C, und
b. ein ionisches Tensid in einer Menge von 1-30 mmol pro Liter Wasser,
enthält, wenn die Temperatur des auf Wasser basierenden Systems erhöht wird.

2. Verwendung nach Anspruch 1, dadurch gekennzeichnet, daß der Celluloseether eine Alkylhydroxyalkylcellulose ist.

3. Verwendung nach Anspruch 1 oder 2, dadurch gekennzeichnet, daß der Celluloseether in solcher Menge zugesetzt wird, daß er eine Viskosität von 30-5000 cP, gemessen gemäß Brookfield LV, 12 UpM bei 20°C, hat.

4. Verwendung nach irgendeinem der Ansprüche 1-3, dadurch gekennzeichnet, daß die ionische Verbindung ein Sulfat mit einer Kohlenwasserstoffgruppe von 8-24 Kohlenstoffatomen ist.

5. Verwendung nach irgendeinem der Ansprüche 1-3, dadurch gekennzeichnet, daß die Verbindung eine quaternäre Ammoniumverbindung mit einer Kohlenwasserstoffgruppe von 8-24 Kohlenstoffatomen ist.

6. Verwendung nach irgendeinem der Ansprüche 1-5, dadurch gekennzeichnet, daß die ionische Verbindung in einer Menge von 2-20 mmol pro Liter Wasser zugesetzt wird.

7. Verwendung nach den Ansprüchen 1-6, dadurch gekennzeichnet, daß das ionische Tensid in einem Gehalt entsprechend dem 0,2-5 Fachen seiner kritischen Micellenbildungs-Konzentration zugesetzt wird.

## Revendications

1. Utilisation d'un système à base d'eau contenant une phase liquide dont au moins 85% est de l'eau et qui contient comme agent ajustant la viscosité:
a. un éther cellulosique non ionique en une quantité telle que sa solution aqueuse possède une viscosité de 10 à 10 000 cP, mesurée à l'aide d'un appareil Brookfield LV, 12 t/min à 20°C, et
b. un composé tensio-actif ionique à raison de 1 à 30 mmoles par litre d'eau,
quand on augmente la température du système à base d'eau.

2. Utilisation selon la revendication 1, caractérisée en ce que l'éther cellulosique est une alkylhydroxyalkylcellulose.

3. Utilisation selon la revendication 1 ou 2, caractérisée en ce que l'éther cellulosique est ajouté en une quantité telle qu'il possède une viscosité de 30 à 5 000 cP, mesurée à l'aide d'un appareil Brookfield LV, 12 t/min à 20°C.

4. Utilisation selon l'une quelconque des revendications 1 à 3, caractérisée en ce que le composé ionique est un sulfate avec un groupe hydrocarboné ayant 8 à 24 atomes de carbone.

5. Utilisation selon l'une quelconque des revendications 1 à 3, caractérisée en ce que le composé est un composé ammonium quaternaire avec un groupe hydrocarboné ayant 8 à 24 atomes de carbone.

6. Utilisation selon l'une quelconque des revendications 1 à 5, caractérisée en ce que le composé ionique est ajouté à raison de 2 à 20 mmoles par litre d'eau.

7. Utilisation selon les revendications 1 à 6, caractérisée en ce que le composé tensio-actif ionique est ajouté à raison de 0,2 à 5 fois sa concentration critique pour la formation de micelles.
